# EUROPEAN PATENT SPECIFICATION

(11) **EP 3 077 099 B1**
(45) Date of publication and mention of the grant of the patent: **26.10.2022**
(21) Application number: 14811818.5
(22) Date of filing: 05.12.2014
(51) Int. Cl.: C01B 32/05, C01B 3/24, B01J 19/08, C10G 2/00, H05H 1/48

(54) **PLASMA REACTOR AND METHOD FOR DECOMPOSING A HYDROCARBON FLUID**
PLASMAREAKTOR UND VERFAHREN ZUR ZERSETZUNG EINER KOHLENWASSERSTOFFFLÜSSIGKEIT
RÉACTEUR À PLASMA ET PROCÉDÉ DE DÉCOMPOSITION D'UN FLUIDE HYDROCARBURE

(30) Priority: 06.12.2013 DE 102013020375
(43) Date of publication of application: 12.10.2016
(73) Proprietor: CAPHENIA GmbH, 83233 Bernau a. Chiemsee (DE)
(72) Inventor: KÜHL, Olaf, 17489 Greifswald (DE)
(74) Representative: Wagner & Geyer
(86) International application number: PCT/EP2014/076737
(87) International publication number: WO 2015/082689

(56) References cited:
- WO-A1-93/12634
- WO-A1-94/14899
- WO-A2-2013/052548
- CA-A1- 2 840 297
- CA-A1- 2 842 122

## Description

The present invention relates to a plasma reactor for decomposing a hydrocarbon fluid, to a method of operating a plasma reactor and a plant for the production of synthetic hydrocarbons.

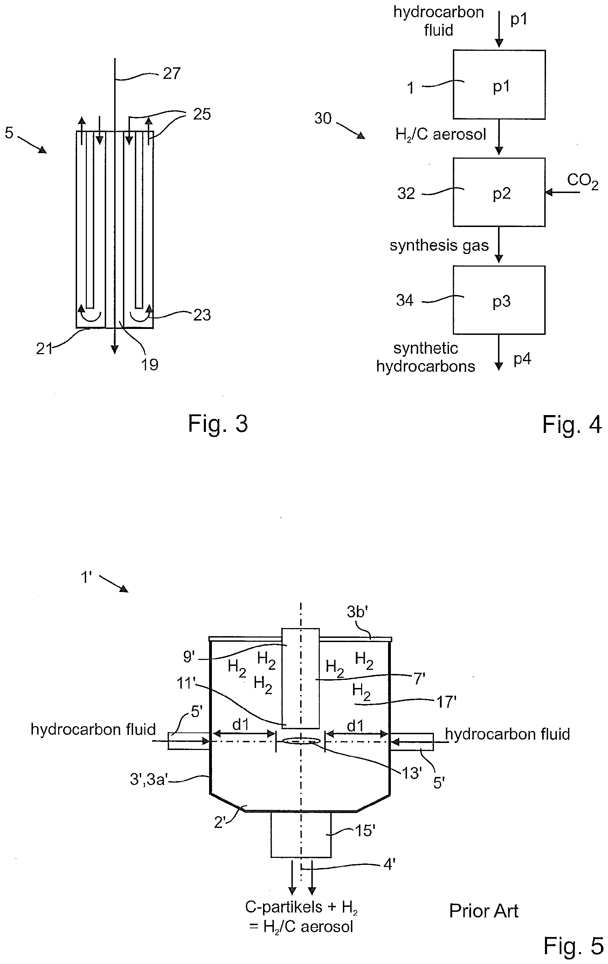

Fig. 5 depicts a known plasma reactor 1' which was used in the 1990s as a test reactor for the production of carbon particles or C particles (e.g. known from WO 94/14899 A1). The known plasma reactor 1' comprises a reactor chamber 2' which is enclosed by a reactor wall 3' having a lower part 3a' and a cover 3b'. The reactor chamber 2' is substantially cylindrical and has a central axis 4'. A plurality of hydrocarbon fluid inlets 5' are provided on the cylindrical outer wall which are adapted to direct a hydrocarbon fluid in the radial direction. A plasma burner 7' comprising elongated electrodes (which are not shown in more detail) is fixed to the cover 3b' of the reactor wall 3'. The plasma burner 7' has a base part 9' which is fixed to the cover 3b' of the reactor wall 3'. At the other end thereof opposite the base part 9', the plasma burner, 7' has a burner part 11' which projects into the reactor chamber 2'. At the other end of the reactor chamber 2' opposite the plasma burner 7', the plasma reactor 1' has an outlet 15' through which the substances resulting from the fragmentation of the incoming hydrocarbon fluid can escape. In operation of the known plasma reactor 1', a plasma 13' is formed in the vicinity of the burner part 11'. A hydrocarbon fluid is introduced through the hydrocarbon fluid inlets 5' in a direction towards the plasma 13'. The hydrocarbon fluid is decomposed in the absence of oxygen and at operating temperatures of up to 2000°C into hydrogen and C particles which emerge from the outlet 15' of the plasma reactor in the form of a H₂/C aerosol. Besides for the production of carbon particles, plasma reactors may be used in plants for producing synthetic hydrocarbons. Such plants are known e.g. from CA 2 842 122 A1 and CA 2 840 297 A1.

From US 5 481 080 A or WO 93/12634 A1, there is known a plasma burner which has two or more tubular electrodes which are arranged to be mutually coaxial. An inlet pipe for introducing a gas that is to be treated by the plasma is arranged coaxially within the inner tubular electrode. The inlet pipe ends in the vicinity of a free end of the two tubular electrodes where a plasma arc is formed when the system is in operation.

The following problems occurred with the known plasma reactors. There was a build-up of carbon deposits at the hydrocarbon fluid inlets 5' which, on the one hand, can clog the inlets and on the other hand can lead to large chunks of carbon or C particles which are then no longer available for the H₂/C aerosol being produced. In order to prevent the hydrocarbons from decomposing immediately after exiting the hydrocarbon fluid inlets 5' and thereby causing deposits, the hydrocarbon fluid inlets 5' were arranged at a sufficiently large distance d1 from the plasma 13'. In addition, the reactor walls 3' had to be positioned far away from the plasma 13' because of the high operating temperatures in order to reduce thermal load on the reactor wall 3'. As a consequence, the reactor chamber 2' has to be of a certain size which results in there being unused free space 17' (see Fig. 5) between the plasma arc and the upper part of the reactor chamber. Hot hydrogen in particular accumulated in the free space 17' and this led to a substantial loss of heat. In addition, there was a large build-up of heat in this region leading to temperatures of up to 2500°C. These high temperatures imposed substantial demands on the material of the electrodes and the reactor wall, in particular, because of the differing coefficients of thermal expansion and the stresses in the material resulting therefrom.

Consequently, the object of the present invention is to provide a plasma reactor in which no deposits or fewer deposits of C particles are produced. This object is achieved by a plasma reactor according to Claim 1, by a method of operating a plasma reactor according to Claim 6 and by a plant for the production of synthetic hydrocarbons according to Claim 9.

The plasma reactor for decomposing a hydrocarbon fluid that is being described here, comprises a reactor chamber which is enclosed by a reactor wall and comprises at least one hydrocarbon fluid inlet and at least one outlet, and also a plasma burner comprising at least two elongated electrodes which each have a base part that is fixed to the reactor wall and a burner part which projects into the reactor chamber and has a free end wherein the outlet is located at the other end of the reactor chamber opposite the plasma burner. The hydrocarbon fluid inlet opens out into the reactor chamber in such a manner that a hydrocarbon fluid flowing out therefrom flows in a space between the reactor wall and the electrodes along at least one electrode to the free end of the burner part. Deposits of C particles can be reduced or even entirely prevented by this arrangement of the hydrocarbon fluid inlet since a high rate of flow of the fluid is achieved and the direction of flow of the incoming fluid is directed away from the hydrocarbon fluid inlet. Further, the distance between the hydrocarbon fluid inlet and the base part is smaller than the distance between the hydrocarbon fluid inlet and the free end. The plasma is located at the free end of the plasma burner and it also produces radiant heat. The inlets are shielded from the radiant
heat. The inlets are shielded from the radiant heat by the body of the plasma burner because the hydrocarbon fluid inlet is arranged in the vicinity of the base part.

Advantageously, the plasma burner comprises two tubular electrodes which are arranged one within the other; and the hydrocarbon fluid inlet is arranged outside the outer tubular electrode in the radial direction. This arrangement is advantageous when using long-lived tubular electrodes.

The hydrocarbon fluid inlet is preferably aligned in such a way that the hydrocarbon fluid flowing out therefrom flows in the same direction as the longitudinal extent of the electrodes. Overheating of the electrodes and accumulation of hot substances in the upper region of the reactor are thereby prevented. The inflowing hydrocarbon fluid also functions as a thermal shield for the reactor wall.

Preferably, the hydrocarbon fluid inlet and the outlet are arranged at opposite ends of the reactor chamber. There is thus a flow in a direction from the hydrocarbon fluid inlet along the plasma burner to the outlet and the reaction time is reduced due to the improved utilization of the hot zone.

Advantageously, the hydrocarbon fluid inlet has cooled inlet channels in order to reduce the likelihood of depositions of C particles.

A method of operating a plasma reactor in accordance with the embodiments being described here achieves the aforesaid object in that the hydrocarbon fluid is passed through the reactor chamber with a space velocity of 500 - 1000 1/h with respect to the volume of the reactor chamber. A high rate of flow thus ensues which counteracts the deposition of C particles.

Preferably in this method, the hydrocarbon fluid is directed along the plasma burner from the base part toward the free end. Overheating of the electrodes and an accumulation of hot substances in the upper region of the reactor is thereby prevented.

The inflowing hydrocarbon fluid also functions as a thermal shield for the reactor wall.

In the method, the hydrocarbon fluid is advantageously introduced at a pressure of 15 to 40 bar, preferentially of 18 to 22 bar. Gaseous hydrogen which is compressible is formed in the reactor chamber. If, in addition, the hydrocarbon fluid is a gas (e.g. natural gas), then this gas too is compressible. A higher density of gaseous substances can be achieved within the reactor at the aforementioned pressures, this thereby leading to a higher throughput capacity of the plasma reactor. Consequently, a smaller reactor volume can be used at higher pressures, this thereby offering the advantages of a mechanically stable reactor volume and cost savings during manufacture and operation.

The plasma reactor described above and the method described above offer advantages in a plant for the production of synthetic hydrocarbons which comprises the following: a plasma reactor for decomposing a hydrocarbon fluid into carbon and hydrogen in accordance with the embodiments described above, a C converter which is adapted to effect the process of converting (a) carbon with CO₂ into CO or, (b) carbon with H₂O into a CO/H₂ gas mixture, wherein the C converter comprises at least one processing space having at least one input for CO2 or H₂O, at least one aerosol input and at least one C converter output for a synthesis gas resulting from the conversion process. The aerosol input of the C converter is connected to the output of the plasma reactor. The plant also comprises a CO converter, wherein the CO converter has a processing space in which a catalyst is arranged, further means for bringing the synthesis gas from the C converter into contact with the catalyst, and a control unit for controlling or regulating the temperature of the catalyst and/or of the synthesis gas to a pre-determined temperature. An operating pressure of 15 to 40 bar and especially of 18 to 25 bar prevails in the plasma reactor, in the C converter and in the CO converter. A high throughput capacity of the entire plant can thus be achieved. Furthermore, the plant can be attached directly to a gas-pipeline.

The invention as well as further details and advantages thereof are described in the following with the aid of preferred exemplary embodiments taken with reference to the Figures. These show:
- Fig. 1: a plasma reactor for decomposing a hydrocarbon fluid in accordance with the present disclosure which comprises an output for the substances obtained by the decomposition process;
- Fig. 2: a plasma reactor for decomposing a hydrocarbon fluid in accordance with the present disclosure which has a plurality of outputs for the substances obtained by the decomposition process;
- Fig. 3: a hydrocarbon fluid inlet for a plasma reactor in accordance with the present disclosure;
- Fig. 4: a plant for the production of synthetic hydrocarbons using a plasma reactor in accordance with the present disclosure;
- Fig. 5: a plasma reactor for decomposing a hydrocarbon fluid in accordance with the state of the art.

In the following description, the terms top, bottom, right and left as well as similar terms relate to the orientations and arrangements shown in the Figures and are only meant for describing the embodiments. These terms may refer to preferred arrangements but are not meant to be limiting. In the context of this description, the term hydrocarbon fluid means a fluid containing hydrocarbons (gas, aerosol, liquid).

The plasma reactor 1 in accordance with the present disclosure comprises a reactor chamber 2 which is enclosed by a reactor wall 3 having a lower part 3a and a cover 3b. The reactor chamber 2 could also be divided at a position other than that shown in the Figures. The reactor chamber 2 is substantially cylindrical and has a central axis 4. A plasma burner 7 having elongated electrodes (not shown in detail) is fixed to the cover 3b of the reactor wall 3. The plasma burner 7 has a base part 9 which is fixed to the reactor wall 3 (in particular here, to the cover 3b). At the other end thereof opposite the base part 9, the plasma burner 7 comprises a burner part 11 at a free end 12 of the electrodes which projects into the reactor chamber 2. A plasma 13, which can be controlled by a plasma control device 14 e.g. by magnetic force, is formed between the electrodes. At the other end of the reactor chamber 2 opposite the plasma burner 7, the plasma reactor 1 has an outlet 15 through which the substances resulting from the decomposition of the incoming hydrocarbon fluid can escape. The outlet 15 is arranged at the opposite end of the reactor chamber 2 in the direction of flow.

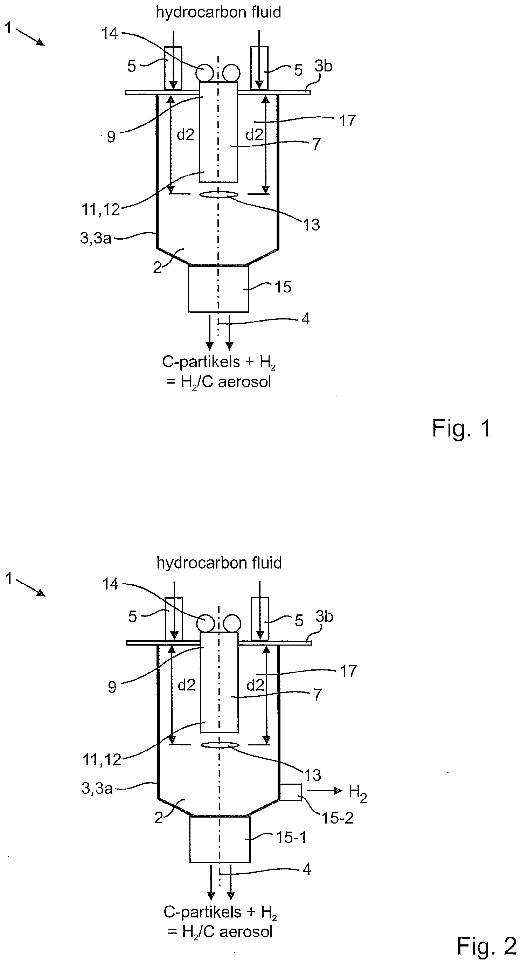

Furthermore, the plasma reactor 1 comprises hydrocarbon fluid inlets 5 which are arranged in the vicinity of the base part 9 of the plasma burner 7. The hydrocarbon fluid inlets 5 open out into the reactor chamber 2 in such a manner that a hydrocarbon fluid flowing out therefrom flows into a free space 17 between the reactor wall 3 and the electrodes of the plasma burner 7 in a direction towards the free end of the electrodes. Due to the arrangement of the hydrocarbon fluid inlets 5 in the vicinity of the base part 9 of the plasma burner 7 that is described here, an adequate spacing d2 from the plasma 13 is maintained (see Figs. 1 and 2). Even if the interior of the reactor chamber 2 is smaller (e.g. a smaller diameter in the case of a cylindrical reactor chamber), the distance d2 between the plasma 13 and the hydrocarbon fluid inlets 5 may still be even larger than the distance d1 in the plasma reactor 1' of the state of the art. Deposition of the C particles at the hydrocarbon fluid inlets 5 can thus be prevented. The hydrocarbon fluid inlets 5 can be cooled as is illustrated in Figure 3. The hydrocarbon fluid inlet 5 has an inlet boring 19 which is surrounded by an inlet wall 21. The inlet wall 21 is surrounded by cooling channels 23 and can act as a heat insulating layer for the reactor chamber 2. In operation, cooling agent runs through the cooling channels 23, as indicated by the arrows 25. Furthermore, hydrocarbon fluid runs through the inlet boring 19, as shown by the arrow 27. Due to the cooling agent and the hydrocarbon fluid being directed therethrough, the hydrocarbon fluid inlets 5 are cooled significantly below the decomposition temperature of the hydrocarbons, and the probability of a deposit of C particles becomes still smaller.

The electrodes which are not shown in detail in the Figures are preferably tubular electrodes or tubing electrodes which are arranged one within the other such as is known from US 5 481 080 A (see above). In the case of tubing electrodes, the incoming hydrocarbon fluid flows along an electrode, namely, along the outer electrode. The hydrocarbon fluid inlets 5 are arranged outside the outer tubular electrode in the radial direction in the case of tubing electrodes. However, it is also conceivable for rod electrodes to be used, for example, two rod electrodes that are arranged next to each other. In the case of rod electrodes, the hydrocarbon fluid flows along two or more electrodes towards their free end. Thus no matter what the type of plasma reactor 1, the hydrocarbon fluid flows into the space 17 along at least one electrode between the reactor chamber 2 and the plasma burner 7.

The plasma arc 13 is formed between the electrodes, for preference using H₂ as the plasma gas since this results in any case from the process of decomposing the hydrocarbons. However, any other suitable gases can be selected as the plasma gas, for example, inert gases such as argon or nitrogen which cannot affect or participate in the reaction or fragmentation process in the plasma arc.

A plasma reactor 1 having a plurality of outlets 15 is shown in Figure 2. A first outlet 15-1 is provided for emitting a H₂/C aerosol as in Fig. 1. A portion of the H₂/C aerosol can likewise be emitted via a second outlet 15-2, this portion being used for example in another reactor or process. Preferably however, only hydrogen H₂ is emitted through the second outlet 15-2, wherein the second outlet 15-2 is designed in such a way that the gaseous hydrogen H₂ separates from the solid C particles.

When the plasma reactor 1 is operational, a plasma 13 is formed between the electrodes in the vicinity of the burner part 11. The plasma 13 usually has temperatures of between 600°C and 2000°C. A hydrocarbon fluid (preferably natural gas) is directed into the reactor chamber 2, in the absence of oxygen, via the hydrocarbon fluid inlets 5 in the direction of the plasma 13. The hydrocarbon fluid is introduced in such a way that, in operation, a high space velocity (unit 1/h; Flow rate m3/h of the hydrocarbon fluid related to the volume m³ of the reactor chamber 2) is reached in the reactor chamber 2. In particular, a space velocity of 500 - 1000 1/h is considered. Due to the high space velocity and thus the high rate of flow of the substances being introduced, the danger of depositions of solids or C particles on the hydrocarbon inlets 5 and in their proximity is additionally reduced.

Furthermore, the free space 17 between the reactor wall 3 and the plasma burner 7 is cooled by the inflowing hydrocarbon fluid. In the case of the plasma reactor 1, the free space 17 can be significantly smaller than that in the plasma reactor 1' of the state of the art. Consequently, the reactor chamber 2 can have a smaller interior (a smaller diameter in the case of a cylindrical reactor chamber 2), thereby permitting the reactor chamber 2 to have a more robust construction. A robust reactor chamber 2 is advantageous for high operational pressures.

Due to the arrangement of the hydrocarbon fluid inlets 5 shown here, the direction of flow of the incoming hydrocarbon fluid is maintained because the outlet 15 is arranged at the opposite end of the reactor chamber 2 in the direction of flow. Consequently, an accumulation of hot substances in the free space 17 which could cause problems in operation is prevented by virtue of the inflowing hydrocarbon fluid. This also reduces the danger of fouling since the C particles are driven toward the outlet 15 by the inflowing hydrocarbon fluid.

As soon as the hydrocarbon fluid enters the region close to the plasma 13 where a decomposition temperature prevails, the hydrocarbons contained in the hydrocarbon fluid are decomposed into C particles and gaseous hydrogen H₂. The decomposition temperature depends on the hydrocarbons that are being introduced and in the case of natural gas for example it is more than 600°C. The hydrogen H₂ and the C particles emerge from the outlet 15 of the plasma reactor in the form of a H₂/C aerosol.

Advantageously, the hydrocarbon fluid arriving at the hydrocarbon fluid inlets is at a pressure of 18 to 25 bar. In this case, the plasma reactor 1 can be connected directly to a natural gas pipeline since the pressure in the pipeline lies approximately in this range. A pressure of about 18 to 25 bar likewise prevails in the reactor chamber 2 when the system is operational. At this pressure, the gaseous constituents such as gaseous hydrogen and natural gas for example are compressed so that the density becomes higher and the throughput can be improved.

The operation of the plasma reactor 1 in accordance with Figure 2 is exactly the same as that described above. The only difference is that a portion of the hydrogen H₂ is removed through the second outlet 15-2. The second outlet 15-2 is arranged in such a way that the C particles can only reach the second outlet 15-2 with difficulty or not at all. This can be achieved for example by means of a labyrinth arrangement or by arranging the second outlet 15-2 such that it is at right angles to the direction of flow of the hydrocarbon fluid or H₂/C aerosol. For example, the second outlet 15-2 can be arranged at an angle of 90° to the central axis 4 and thus to the general direction of flow (as shown in Figure 2). The second outlet 15-2 could also be arranged at an angle opposed to the general direction of flow, i.e. oriented such as to be inclined to the upper right in Fig. 2.

Fig. 4 shows a plant 30 for the production of synthetic hydrocarbons which comprises a plasma reactor 1 as described above, a C converter 32 which is adapted to convert (a) carbon with CO₂ into CO or (b) carbon with H₂O into a CO/H₂ gas mixture, and a CO converter 34 for producing synthetic functionalised and/or non-functionalised hydrocarbons. The C converter 32 comprises at least one processing space having at least one input for CO₂ or H₂O, at least one aerosol input and at least one C converter output for a synthesis gas resulting from the conversion process (a) or (b). The aerosol input of the C converter 32 is connected to the output 15 or 15-1 of the plasma reactor 1 and receives the H2/C aerosol. Conversion of the C particles in the C converter 32 is effected according to any of the following equations:

(a) CO2 + C → 2 CO or

(b) C + H₂O → CO + H₂.

With the H₂ from the H2/C aerosol, this results in a synthesis gas consisting of CO and H2. The CO converter 34 for example implements the process of converting the synthesis gas by means of a Fischer-Tropsch process, in particular by means of an SMDS process. Alternatively, the process of converting the synthesis gas is effected by means of a Bergius-Pier process, a Pier process or a combination of a Pier process with an MtL process (MtL = methanol-to-liquid). The CO converter 34 has a processing space in which a catalyst is arranged, further means for bringing the synthesis gas from the C converter 32 into contact with the catalyst, and a control unit for controlling or regulating the temperature of the catalyst and/or the synthesis gas to a pre-determined temperature. The hydrocarbon fluid is, for example, natural gas or a similar gas which, when the plant 30 is operational, is delivered directly without any change in pressure from a (natural gas) pipeline to the plasma reactor 1 at a pressure p1 of 15 to 40 bar and in particular, of 18 to 25 bar. The same pressure p1 prevails in the reactor chamber 2 of the plasma reactor 1. The H2/C aerosol emerging from the plasma reactor 1 is fed into the C converter 32 at the same pressure (pressure p2 = p1) and is mixed with CO₂ or H₂O at a temperature of 850 - 1700°C in order to produce a synthesis gas (CO and H₂). The synthesis gas is then introduced at the same pressure into the CO converter 34 (pressure p3 = p2 = p1) and converted into synthetic hydrocarbons in accordance with any of the abovementioned processes. The synthetic hydrocarbons are then removed from the plant (at a lower ambient pressure p4 of approx. 1 bar). A substantially identical operating pressure of 15 to 40 bar (especially of 18 to 25 bar) thus prevails from the plasma reactor 1 up to the CO converter 34.

It may be summarized that the following advantages can be achieved with the plasma reactor 1 described here: prevention of deposits of C particles; utilisation of the reactor region above the plasma 13 (free space 17 which was previously a thermally dead volume); no overheating of the upper region of the reactor since the inflowing hydrocarbon fluid cools the electrodes and the reactor wall; the inflowing hydrocarbon fluid functions as a thermal shield for the reactor wall 3; the reactor chamber can be made of ceramic (e.g. Al₂O₃); the capital outlays can be lowered; a reduction in power consumption by making use of the heat produced by the plasma to good effect; a reduction of the reactor volume; the principle of directing the flow in a direction from the inlets 5 along the plasma burner 7 to the outlet 15 reduces the reaction time due to the improved utilization of the hot zone.

The invention has been described on the basis of preferred exemplary embodiments, wherein the individual features of the described exemplary embodiments may be freely combined with one another and/or may be substituted for one another insofar as they are compatible. In like manner, individual features of the described exemplary embodiments may be omitted as long as they are not essential. Numerous modifications and implementations are possible and obvious for the skilled person without thereby departing from the scope of the invention.

## Claims

1. Plasma reactor (1) for decomposing a hydrocarbon fluid which comprises the following:
a reactor chamber (2) which is enclosed by a reactor wall (3, 3a, 3b) and which has at least one hydrocarbon fluid inlet (5) and at least one outlet (15, 15-1, 15-2);
a plasma burner (7) having at least two elongated electrodes which each comprise a base part (9) which is fixed to the reactor wall (3, 3a, 3b) and a burner part (11) which projects into the reactor chamber (2) and has a free end (12);
wherein the outlet (15, 15-1, 15-2) is located at the other end of the reactor chamber (2) opposite the plasma burner (7);
wherein the hydrocarbon fluid inlet (5) opens out into the reactor chamber (2) in such a manner that hydrocarbon fluid flowing out therefrom flows in a space (17) between the reactor wall (3, 3a, 3b) and the electrodes along at least one electrode to the free end (12) of the burner part (11); and
wherein the distance between the hydrocarbon fluid inlet (5) and the base part (9) is smaller than the distance between the hydrocarbon fluid inlet (5) and the free end (12).

2. Plasma reactor (1) according to Claim 1, wherein the plasma burner (7) comprises two tubular electrodes arranged one within the other; and
wherein the hydrocarbon fluid inlet (5) is arranged outside the outer tubular electrode in the radial direction.

3. Plasma reactor (1) according to any of the preceding Claims, wherein the hydrocarbon fluid inlet (5) is aligned in the direction of extension of the electrodes.

4. Plasma reactor (1) according to any of the preceding Claims, wherein the hydrocarbon fluid inlet (5) and the outlet (15, 15-1, 15-2) are arranged at opposite ends of the reactor chamber (2).

5. Plasma reactor (1) according to any of the preceding Claims, wherein the hydrocarbon fluid inlet (5) comprises cooled inlet channels (19).

6. Method of operating a plasma reactor (1) according to any of the preceding Claims, wherein the hydrocarbon fluid is directed through the reactor chamber (2) at a space velocity of 500 - 1000 1/h with reference to the volume of the reactor chamber (2).

7. Method according to Claim 6, wherein the hydrocarbon fluid is directed from the base part (9) along the plasma burner (7) toward the free end (12).

8. Method according to Claim 7, wherein the hydrocarbon fluid is introduced into the reactor chamber (2) at a pressure of 18 to 22 bar.

9. Plant for the production of synthetic hydrocarbons which comprises the following:
- a plasma reactor (1) for decomposing a hydrocarbon fluid into carbon and hydrogen according to any of the Claims 1 to 5;
- a C converter (32) which is adapted to effect the process of converting
a) carbon with CO₂ into CO or
b) carbon with H₂O into a CO/H₂ gas mixture,
wherein the C converter (32) comprises at least one processing space having at least one input for CO2 or H₂O, at least one aerosol input and at least one C converter output for a synthesis gas resulting from the conversion process, wherein the aerosol input of the C converter (32) is connected to the output (15; 15-1) of the plasma reactor (1); and
a CO converter (34) comprising a processing space in which a catalyst is arranged, further means for bringing the synthesis gas from the C converter (32) into contact with the catalyst, and a control unit for controlling or regulating the temperature of the catalyst and/or the synthesis gas to a pre-determined temperature;
wherein an operating pressure of 15 to 40 bar and in particular of 18 to 25 bar prevails in the plasma reactor (1), in the C converter (32) and in the CO converter (34).

## Patentansprüche

1. Plasma-Reaktor (1) zum Aufspalten eines Kohlenwasserstoff-Fluids, der Folgendes aufweist:
eine Reaktorkammer (2), die von einer Reaktorwand (3, 3a, 3b) umschlossen ist und wenigstens einen Kohlenwasserstoff-Fluid-Einlass (5) und wenigstens einen Auslass (15, 15-1, 15-2) aufweist;
einen Plasma-Brenner (7) mit wenigstens zwei langgestreckten Elektroden, die jeweils einen Basisteil (9), der an der Reaktorwand (3, 3a,
3b) befestigt ist, und einen Brennerteil (11) aufweisen, der in die Reaktorkammer (2) ragt und ein freies Ende (12) aufweist;
wobei der Auslass (15, 15-1, 15-2) am anderen Ende der Reaktorkammer (2) gegenüberliegend zum Plasma-Brenner (7) angeordnet ist;
wobei der Kohlenwasserstoff-Fluid-Einlass (5) derart in die Reaktorkammer (2) mündet, dass daraus ausströmendes Kohlenwasserstoff-Fluid in einem Raum (17) zwischen der Reaktorwand (3, 3a, 3b) und
den Elektroden entlang wenigstens einer Elektrode zum freien Ende (12) des Brennerteils (11) strömt; und
wobei der Abstand zwischen dem Kohlenwasserstoff-Fluid-Einlass (5) und dem Basisteil (9) kleiner ist als der Abstand zwischen dem Kohlenwasserstoff-Fluid-Einlass (5) und dem freien Ende (12).

2. Plasma-Reaktor (1) nach Anspruch 1, wobei der Plasma-Brenner (7) zwei ineinander angeordnete rohrförmige Elektroden aufweist; und wobei der Kohlenwasserstoff-Fluid-Einlass (5) in Radialrichtung außerhalb der äußeren rohrförmigen Elektrode angeordnet ist.

3. Plasma-Reaktor (1) nach einem der vorhergehenden Ansprüche, wobei der Kohlenwasserstoff-Fluid-Einlass (5) in Richtung der Längserstreckung der Elektroden ausgerichtet ist.

4. Plasma-Reaktor (1) nach einem der vorhergehenden Ansprüche, wobei der Kohlenwasserstoff-Fluid-Einlass (5) und der Auslass (15, 15-1, 15-2) an entgegengesetzten Enden der Reaktorkammer (2) angeordnet sind.

5. Plasma-Reaktor (1) nach einem der vorhergehenden Ansprüche, wobei der Kohlenwasserstoff-Fluid-Einlass (5) gekühlte Einlasskanäle (19) aufweist.

6. Verfahren zum Betrieb eines Plasma-Reaktors (1) nach einem der vorhergehenden Ansprüche, bei dem das Kohlenwasserstoff-Fluid mit einer Raumgeschwindigkeit von 500 - 1000 1/h bezogen auf das Volumen der Reaktorkammer (2) durch die Reaktorkammer (2) geleitet wird.

7. Verfahren nach Anspruch 6, bei dem das Kohlenwasserstoff-Fluid vom Basisteil (9) entlang des Plasma-Brenners (7) in Richtung des freien Endes (12) geleitet wird.

8. Verfahren nach Anspruch 7, bei dem das Kohlenwasserstoff-Fluid mit einem Druck von 18 bis 22 bar in die Reaktorkammer (2) eingeleitet wird.

9. Anlage zur Erzeugung von synthetischen Kohlenwasserstoffen, die Folgendes aufweist:
- einen Plasma-Reaktor (1) zum Aufspalten eines Kohlenwasserstoff-Fluids in Kohlenstoff und Wasserstoff nach einem der Ansprüche 1 - 5;
- einen C-Konverter (32), der geeignet ist zur Umwandlung von
a) Kohlenstoff mit CO₂ in CO oder
b) Kohlenstoff mit H₂O in ein CO/H₂-Gasgemisch
wobei der C-Konverter (32) wenigstens einen Prozessraum mit wenigstens einem Eingang für CO₂ oder H₂O, wenigstens einem Aerosol-Eingang und wenigstens einen C-Konverterausgang für ein aus der Umwandlung resultierendes Synthesegas aufweist, wobei der Aerosol-Eingang des C-Konverters (32) mit dem Ausgang (15; 15-1) des Plasma-Reaktors (1) verbunden ist; und
einen CO-Konverter (34) mit einem Prozessraum, in dem ein Katalysator angeordnet ist, weiter mit Mitteln zum Leiten des Synthesegases aus dem C-Konverter (32) in Kontakt mit dem Katalysator, und mit einer Steuereinheit zum Steuern oder Regeln der Temperatur des Katalysators und/oder des Synthesegases auf eine vorbestimmte Temperatur; wobei in dem Plasma-Reaktor (1), in dem C-Konverter (32) und in dem CO-Konverter (34) jeweils ein Betriebsdruck von 15 bis 40 bar und insbesondere von 18 bis 25 bar herrscht.

## Revendications

1. Réacteur à plasma (1) pour décomposer un fluide hydrocarboné, qui comprend le suivant
une chambre de réacteur (2) qui est entourée par une paroi de réacteur (3, 3a, 3b) et qui a au moins une entrée de fluide hydrocarboné (5) et au moins une sortie (15, 15-1, 15-2) ;
un brûleur à plasma (7) ayant au moins deux électrodes allongées qui comprennent chacune une partie de base (9) qui est fixée à la paroi du réacteur (3, 3a, 3b) et une partie de brûleur (11) qui fait saillie dans la chambre du réacteur (2) et a une extrémité libre (12) ;
dans lequel la sortie (15, 15-1, 15-2) est située à l'autre extrémité de la chambre du réacteur (2) à l'opposé du brûleur à plasma (7) ;
dans lequel l'entrée de fluide hydrocarboné (5) débouche dans la chambre de réacteur (2) de telle manière que le fluide hydrocarboné qui en sort s'écoule dans un espace (17) entre la paroi du réacteur (3, 3a, 3b) et les électrodes le long d'au moins une électrode jusqu'à l'extrémité libre (12) de la partie de brûleur (11) ; et
dans lequel la distance entre l'entrée de fluide hydrocarboné (5) et la partie de base (9) est inférieure à la distance entre l'entrée de fluide hydrocarboné (5) et l'extrémité libre (12).

2. Réacteur à plasma (1) selon la revendication 1, dans lequel le brûleur à plasma (7) comprend deux électrodes tubulaires disposées l'une dans l'autre ; et
dans lequel l'entrée de fluide hydrocarboné (5) est disposée à l'extérieur de l'électrode tubulaire extérieure dans la direction radiale.

3. Réacteur à plasma (1) selon l'une quelconque des revendications précédentes, dans lequel l'entrée de fluide hydrocarboné (5) est alignée dans la direction d'extension des électrodes.

4. Réacteur à plasma (1) selon l'une quelconque des revendications précédentes, dans lequel l'entrée de fluide hydrocarboné (5) et la sortie (15, 15-1, 15-2) sont disposées aux extrémités opposées de la chambre du réacteur (2).

5. Réacteur à plasma (1) selon l'une quelconque des revendications précédentes, dans lequel l'entrée de fluide hydrocarboné (5) comprend des canaux d'entrée refroidis (19).

6. Procédé pour opérer un réacteur à plasma (1) selon l'une quelconque des revendications précédentes, dans lequel le fluide hydrocarboné est dirigé à travers la chambre du réacteur (2) à une vitesse spatiale de 500 - 1000 1/h par rapport au volume de la chambre du réacteur (2).

7. Procédé selon la revendication 6, dans lequel le fluide hydrocarboné est dirigé depuis la partie de base (9) le long du brûleur à plasma (7) vers l'extrémité libre (12).

8. Procédé selon la revendication 7, dans lequel le fluide hydrocarboné est introduit dans la chambre du réacteur (2) à une pression de 18 à 22 bars.

9. Installation pour la production d'hydrocarbures synthétiques qui comprend le suivant :
- un réacteur à plasma (1) pour décomposer un fluide hydrocarboné en carbone et en hydrogène selon l'une quelconque des revendications 1 à 5 ;
- un convertisseur de C (32) qui est adapté pour effectuer le processus de conversion dea) du carbone avec du CO₂ en CO ou b) du carbone avec H₂O en un mélange gazeux CO/H₂, dans lequel le convertisseur C (32) comprend au moins un espace de traitement ayant au moins une entrée pour CO₂ ou H₂O, au moins une entrée d'aérosol et au moins une sortie de convertisseur C pour un gaz de synthèse résultant du processus de conversion, dans lequel l'entrée d'aérosol du convertisseur C (32) est connectée à la sortie (15 ; 15-1) du réacteur à plasma (1) ; et
un convertisseur de CO (34) comprenant un espace de traitement dans lequel un catalyseur est disposé, des moyens supplémentaires pour amener le gaz de synthèse provenant du convertisseur de C (32) en contact avec le catalyseur, et une unité de commande pour commander ou réguler la température du catalyseur et/ou du gaz de synthèse à une température prédéterminée ;
dans lequel une pression de fonctionnement de 15 à 40 bars et en particulier de 18 à 25 bars règne dans le réacteur à plasma (1), dans le convertisseur C (32) et dans le convertisseur CO (34).
